(19) Europäisches Patentamt
European Patent Office
Office européen des brevets

(11) **EP 3 431 964 B1**

(12) **FASCICULE DE BREVET EUROPEEN**

(45) Date de publication et mention
de la délivrance du brevet:
**30.10.2019 Bulletin 2019/44**

(51) Int Cl.:
***G01N 21/3504*** *(2014.01)*

(21) Numéro de dépôt: **18184525.6**

(22) Date de dépôt: **19.07.2018**

(54) **CAVITÉ OPTIQUE À FORTE DYNAMIQUE**

OPTISCHER HOHLRAUM MIT STARKER DYNAMIK

HIGH-DYNAMIC OPTICAL CAVITY

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **21.07.2017 FR 1756942**

(43) Date de publication de la demande:
**23.01.2019 Bulletin 2019/04**

(73) Titulaire: **Commissariat à l'Énergie Atomique
et aux Énergies Alternatives
75015 Paris (FR)**

(72) Inventeur: **BOUTAMI, Salim
38100 GRENOBLE (FR)**

(74) Mandataire: **GIE Innovation Competence Group
310, avenue Berthelot
69372 Lyon Cedex 08 (FR)**

(56) Documents cités:
**WO-A1-01/81900 WO-A1-98/09152
US-A- 5 767 967 US-A- 6 120 166**

## Description

## Domaine technique

L'invention se rapporte au domaine technique des cavités optiques. L'invention trouve notamment son application dans les capteurs spectroscopiques. Un capteur spectroscopique comporte une cavité optique, une source lumineuse émettant un rayonnement lumineux, et un détecteur du rayonnement lumineux. La source lumineuse peut être par exemple une source thermique ou un laser à cascade quantique. On peut citer comme applications les capteurs de fluide, les capteurs de particules, les capteurs biologiques etc.

Plus précisément, on peut citer un capteur infrarouge non-dispersif (classiquement dénommé NDIR pour « *Non-Dispersive InfraRed* » en langue anglaise) pour détecter un fluide tel qu'un gaz. La source lumineuse infrarouge est préférentiellement une source thermique. Par « infrarouge », on entend une longueur d'onde comprise entre 0,78 $\mu$m et 12 $\mu$m. Le détecteur infrarouge peut être par exemple un bolomètre ou un pyromètre. L'application préférentiellement envisagée est la détection d'un gaz, par exemple le $CO_2$, de manière fiable en environnement industriel, la détection étant classiquement une détection de seuil. Une autre application possible est l'analyse d'un gaz, impliquant des mesures quantitatives précises, sélectives, et stables de manière à obtenir une analyse de composition, voire une détection individuelle de la charge en $CO_2$ de l'air respiré. Un tel capteur NDIR peut être intégré dans un système portatif tel qu'un téléphone portable, un ordinateur, un appareil photo etc. L'invention peut également trouver son application dans des systèmes fixes pour la domotique, l'analyse de la qualité de l'air intérieur et extérieur, les détecteurs industriels etc.

Le principe de fonctionnement d'un capteur NDIR consiste à mesurer, par le détecteur infrarouge, la baisse d'intensité lumineuse lorsque le gaz à détecter se trouve à l'intérieur de la cavité optique. En effet, le gaz à l'intérieur de la cavité optique absorbe la lumière infrarouge à une longueur d'onde spécifique (ou sur une bande spectrale spécifique) au gaz à détecter. Pour ce faire, lorsque la source lumineuse est une source thermique, le détecteur infrarouge est classiquement muni d'un filtre adapté pour filtrer ladite longueur d'onde (ou la bande spectrale) prédéterminée.

Par exemple, dans l'hypothèse d'une distribution uniforme des molécules gazeuses, la loi de Beer-Lambert donne une formule pour la transmittance T de la lumière à travers un gaz :

$$T = \exp(-\sigma N l)$$

où :

- $\sigma$ est la section efficace d'absorption d'une molécule de gaz,
- N est le nombre de molécules de gaz par unité de volume,
- l est la longueur d'interaction entre le gaz et la lumière.

A titre d'exemple, pour le $CO_2$, la longueur d'interaction l est préférentiellement comprise entre quelques mm et quelques dizaines de cm.

Un capteur NDIR compact, à bas coût et à faible consommation électrique est recherché. Comme une grande compacité est recherchée, du fait de la longueur d'interaction élevée (pouvant atteindre quelques dizaines de cm), il n'est pas possible d'utiliser une cavité optique à trajet direct entre la source lumineuse et le détecteur infrarouge, y compris en présence de lentilles. Par « cavité à trajet direct », on entend une cavité fonctionnant sans miroir(s) pouvant replier le faisceau lumineux.

## Etat de la technique antérieure

Il est connu de replier une cavité optique au sens où au moins un miroir est agencé dans la cavité optique pour guider un rayonnement lumineux émis par une source lumineuse selon un trajet indirect issu de réflexion(s) successive(s) sur le ou les miroirs.

Une cavité optique connue de l'état de la technique, notamment du document DE 4102146, comporte un miroir elliptique destiné à réfléchir un rayonnement lumineux émis par une source lumineuse. La source lumineuse est agencée à un foyer du miroir elliptique, et un détecteur est agencé à l'autre foyer du miroir elliptique. Ainsi, si l'on considère le modèle de l'optique géométrique, les rayons lumineux émis par la source lumineuse parcourent la cavité optique deux fois.

Si l'on note $C_{min}$ la concentration minimale de gaz détectable, et $C_{max}$ la concentration maximale de gaz détectable, il est possible de montrer que $C_{min}$ et $C_{max}$ vérifient, pour une telle cavité optique de l'état de la technique, les relations suivantes :

$$C_{min} = \frac{1}{\alpha\, l\, \frac{P_0}{\varepsilon} \exp(-\beta\, l)}$$

$$C_{max} = \frac{\log(P_0/\varepsilon)}{\alpha\, l} - \frac{\beta}{\alpha}$$

où :

- $\alpha$ (en ppm$^{-1}$ m$^{-1}$) est l'absorptivité du gaz à la longueur d'onde considérée du rayonnement lumineux,
- $\beta$ est un coefficient d'atténuation lié aux pertes intrinsèques de la cavité optique, sans gaz,
- l (en m) est la longueur d'interaction entre le gaz et la lumière au sein de la cavité optique,
- $P_0$ est l'intensité du rayonnement lumineux émis par la source,
- $\varepsilon$ est le bruit du détecteur.

Une telle cavité de l'état de la technique n'est pas entièrement satisfaisante en termes d'étendue de la gamme de concentration détectable. Il est recherché un capteur spectroscopique possédant une gamme de concentration détectable la plus étendue possible, c'est-à-dire un intervalle [$C_{min}$, $C_{max}$] avec la plus forte dynamique possible.

**Exposé de l'invention**

L'invention vise à remédier en tout ou partie aux inconvénients précités. A cet effet, l'invention a pour objet une cavité optique, comportant :

- un ensemble de miroirs elliptiques, destinés à recevoir un rayonnement lumineux émis par une source lumineuse, le rayonnement lumineux sortant des miroirs elliptiques étant destiné à être reçu par un détecteur ;
- un premier foyer commun et un second foyer commun, partagés par l'ensemble des miroirs elliptiques, la source lumineuse étant destinée à être agencée au premier foyer commun, le détecteur étant destiné à être agencé au second foyer commun ;
- un contour, comprenant une partie formée par l'ensemble des miroirs elliptiques agencés consécutivement.

Ainsi, une telle cavité optique selon l'invention autorise une plus grande dynamique de l'intervalle [$C_{min}$, $C_{max}$], à compacité égale, par rapport à l'état de la technique, et ce grâce aux premier et second foyers communs partagés par l'ensemble de miroirs elliptiques, les miroirs elliptiques étant agencés consécutivement de manière à former une partie du contour de la cavité optique. En effet, les miroirs elliptiques de l'ensemble possédant un demi-grand axe faible servent à détecter les concentrations de gaz importantes (non saturation en absorption) tandis que les miroirs elliptiques de l'ensemble possédant un demi-grand axe important servent à détecter les concentrations de gaz faibles (trajet optique suffisamment long pour absorber significativement la lumière).

**Définitions**

- Par «contour », on entend l'ensemble des surfaces délimitant extérieurement la cavité optique.
- Par « consécutivement », on entend que l'ensemble des miroirs elliptiques se suivent immédiatement, sans interruption.

La cavité optique selon l'invention peut comporter une ou plusieurs des caractéristiques suivantes.

Selon une caractéristique de l'invention, chaque miroir elliptique possède un demi-grand axe ; et les miroirs elliptiques sont agencés consécutivement de sorte que les demi-grands axes consécutifs forment une suite monotone.

Ainsi, un avantage procuré est d'assurer une continuité de détection des concentrations entre deux miroirs elliptiques consécutifs.

Selon une caractéristique de l'invention, les miroirs elliptiques sont agencés consécutivement du premier foyer commun vers le second foyer commun de sorte que la suite monotone est strictement croissante.

Ainsi, un avantage procuré est d'éviter la présence de zones de masquage du rayonnement lumineux sortant des miroirs elliptiques. Ces zones de masquage ne permettent pas au rayonnement lumineux de converger vers le détecteur, et conduisent à des pertes de flux lumineux.

Selon une caractéristique de l'invention, la suite monotone est une suite géométrique.

Selon une caractéristique de l'invention, la suite géométrique possède une raison, notée q, vérifiant :

$$q = G \log(G)$$

où G est une constante.

Selon une caractéristique de l'invention, les miroirs elliptiques sont agencés consécutivement de manière à former des jonctions, chaque jonction s'étendant suivant un axe passant par le premier foyer commun.

Ainsi, un avantage procuré est d'éviter la présence de zones de masquage du rayonnement lumineux sortant des miroirs elliptiques au niveau des jonctions.

Selon une caractéristique de l'invention, les premier et second foyers communs définissent une droite, et l'axe suivant lequel s'étend chaque jonction forme un angle avec la droite, noté $\theta_i$, orienté du premier foyer commun vers le second foyer commun, et vérifiant :

$$\theta_i = \cos^{-1}\left(1 - \frac{2i}{N}\right), \qquad i \in [\![1, N]\!]$$

où :

- i est la i-ème jonction entre deux miroirs elliptiques consécutifs,
- N est le nombre de miroirs elliptiques.

Ainsi, un avantage procuré est que chaque miroir elliptique reçoit la même proportion de puissance du rayonnement lumineux, ce qui est particulièrement avantageux pour une source lumineuse lambertienne.

Selon une caractéristique de l'invention, la cavité optique comporte deux extrémités réfléchissantes opposées, adaptées pour réfléchir le rayonnement lumineux, et agencées de part et d'autre de l'ensemble des miroirs elliptiques de manière à former un guide d'onde.

Ainsi, de telles extrémités réfléchissantes forment un guide d'onde agencé pour guider le rayonnement lumineux suivant la direction de l'épaisseur de la cavité optique. Il a été constaté qu'il est toujours possible de conjuguer la source lumineuse avec le détecteur dans le plan de la cavité optique, et ce malgré la présence additionnelle d'un tel guide d'onde agencé suivant une direction perpendiculaire au plan de la cavité. Ainsi, un avantage procuré par de telles extrémités réfléchissantes est :

- d'augmenter l'efficacité optique de la cavité optique relativement à l'état de la technique, ou

- de permettre de réduire l'épaisseur de la cavité optique (gain en compacité) relativement à l'état de la technique pour une même efficacité optique.

Or, une cavité optique de l'état de la technique permet d'obtenir un capteur compact dans le plan de la cavité optique, mais pas dans l'épaisseur de la cavité optique. En effet, l'épaisseur de la cavité optique est dictée par l'épaisseur de la source lumineuse. Une réduction de l'épaisseur de la cavité optique conduit à une réduction de la taille de la source lumineuse, et par là-même à une perte d'efficacité optique. Une possibilité de compensation serait d'augmenter la puissance de la source lumineuse, au détriment de la consommation électrique.

L'invention a également pour objet un capteur spectroscopique, comportant :

- une cavité optique conforme à l'invention,
- une source lumineuse, agencée au premier foyer commun pour émettre un rayonnement lumineux ;
- un détecteur, agencé au second foyer commun pour recevoir le rayonnement lumineux sortant des miroirs elliptiques.

**Brève description des dessins**

D'autres caractéristiques et avantages apparaîtront dans l'exposé détaillé de différents modes de réalisation de l'invention, l'exposé étant assorti d'exemples et de références aux dessins joints.

Figure 1 est une vue schématique en coupe transversale d'un capteur spectroscopique comportant une cavité optique selon un premier mode de réalisation de l'invention. Les traits de construction des ellipses sont visibles pour améliorer la compréhension.

Figures 2 à 5 sont des unes vues analogues à la figure 1, illustrant une cavité optique selon différents modes de réalisation de l'invention.

Figure 6 est un graphique illustrant les dimensions (en microns) d'une cavité optique selon un mode de réalisation de l'invention.

Figure 7 est un graphique représentant en ordonnées l'atténuation d'intensité d'un signal lumineux reçu par le détecteur et en abscisses la partie imaginaire de l'indice de réfraction du gaz, et ce pour une cavité optique de l'état de la technique (CAV1) et pour une cavité optique selon l'invention (CAV2).

Par « transversale », on entend une direction perpendiculaire à la direction (notée Z) suivant l'épaisseur de la cavité optique. Le plan de coupe est noté (X, Y) sur les figures, et correspond au plan de la cavité optique.

**Exposé détaillé des modes de réalisation**

Les éléments identiques ou assurant la même fonction porteront les mêmes références pour les différents modes de réalisation, par souci de simplification.

Un objet de l'invention est une cavité optique 1, comportant :

- un ensemble de miroirs elliptiques $M_1$ à $M_6$, destinés à recevoir un rayonnement lumineux 2 émis par une source lumineuse S, le rayonnement lumineux 2 sortant des miroirs elliptiques $M_1$ à $M_6$ étant destiné à être reçu par un détecteur D ;
- un premier foyer commun $F_1$ et un second foyer commun $F_2$, partagés par l'ensemble des miroirs elliptiques $M_1$ à $M_6$, la source lumineuse S étant destinée à être agencée au premier foyer commun $F_1$, le détecteur D étant destiné à être agencé au second foyer commun $F_2$ ;
- un contour, comprenant une partie formée par l'ensemble des miroirs elliptiques $M_1$ à $M_6$ agencés consécutivement.

**Miroirs elliptiques**

Chaque miroir elliptique $M_1$ à $M_6$ forme une portion d'ellipse. Chaque miroir elliptique $M_1$ à $M_6$ possède un demi-grand axe, noté $a_i$, i étant compris entre 1 et N, où N est le nombre de miroirs elliptiques. N est un entier naturel supérieur ou égal à 2, de préférence supérieur ou égal à 3.

Chaque miroir elliptique $M_1$ à $M_6$ possède avantageusement un coefficient de réflexion du rayonnement lumineux 2 supérieur ou égal à 75% pour tout angle d'incidence. Ledit coefficient de réflexion est avantageusement supérieur ou égal à 80%, préférentiellement supérieur ou égal à 85%, plus préférentiellement supérieur ou égal à 90%, pour tout angle d'incidence. Avantageusement, le coefficient de réflexion du rayonnement lumineux 2 est supérieur ou égal à 95%, de préférence supérieur ou égal à 98% pour tout angle d'incidence inférieur à 45°. Par « coefficient de réflexion », on entend le coefficient de réflexion en intensité, pour un angle d'incidence compris entre 0° (incidence normale) et 90° (incidence rasante), pour une longueur d'onde donnée, et tenant compte des polarisations « s » et « p » moyennées arithmétiquement lorsque la source lumineuse S est une source thermique. L'angle d'incidence est l'angle entre la direction de propagation du rayonnement lumineux 2 et la normale à la surface réfléchissante du miroir elliptique correspondant.

Les miroirs elliptiques $M_1$ à $M_6$ sont avantageusement agencés consécutivement de sorte que les demigrands axes consécutifs forment une suite monotone. La suite monotone est avantageusement strictement croissante. La suite monotone est avantageusement une suite géométrique. Ainsi, les demi-grands axes consécutifs vérifient :

$$a_{n+1} = q\, a_n$$

Où q est la raison de la suite géométrique, et n est un entier naturel compris entre 1 et (N -1).

La suite géométrique possède avantageusement une raison, notée q, vérifiant :

$$q = G \log(G)$$

où G est une constante. G est avantageusement proportionnel à $P_0/\varepsilon$, préférentiellement de l'ordre de $P_0/\varepsilon$, où :

- $P_0$ est l'intensité du rayonnement lumineux émis par la source lumineuse S,
- $\varepsilon$ est le bruit du détecteur D.

Comme l'ensemble des miroirs elliptiques $M_1$ à $M_6$ partagent les premier et second foyers communs $F_1$, $F_2$, la distance (notée c) entre le centre des ellipses correspondantes et un foyer est constante. Les demi-petits axes de l'ensemble des miroirs elliptiques $M_1$ à $M_6$ (notés $b_i$, i étant compris entre 1 et N) vérifient la relation suivante :

$$b_i = \sqrt{a_i^2 - c^2}$$

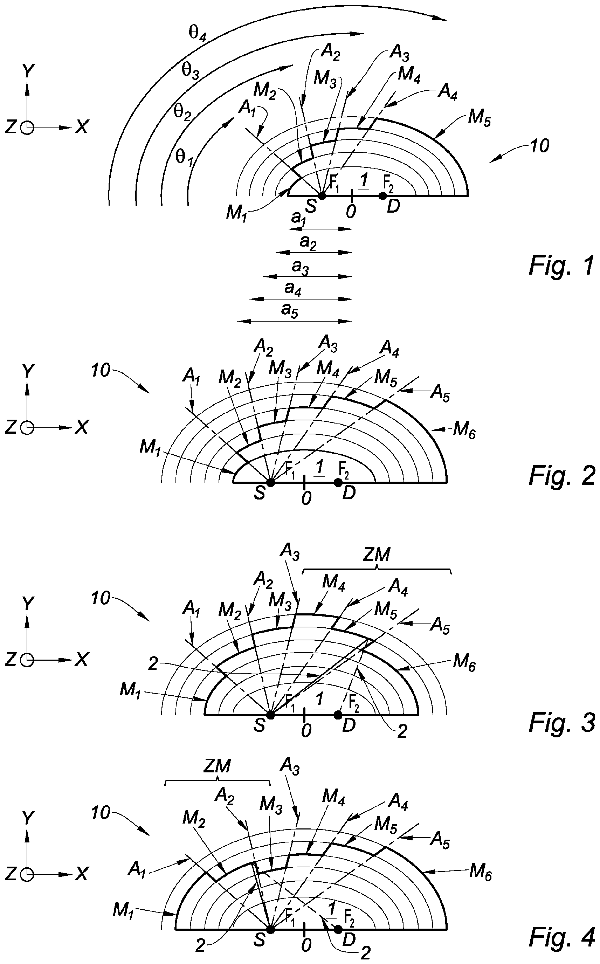

Comme illustré aux figures 1 et 2, les miroirs elliptiques $M_1$ à $M_6$ sont avantageusement agencés consécutivement du premier foyer commun $F_1$ vers le second foyer commun $F_2$ de sorte que la suite géométrique est strictement croissante.

Aux figures 3 et 4, l'agencement des miroirs elliptiques $M_1$ à $M_6$ n'est pas optimal dans la mesure où des zones de masquage ZM du rayonnement lumineux 2 apparaissent lorsque des termes consécutifs de la suite géométrique décroissent du premier foyer commun $F_1$

vers le second foyer commun $F_2$.

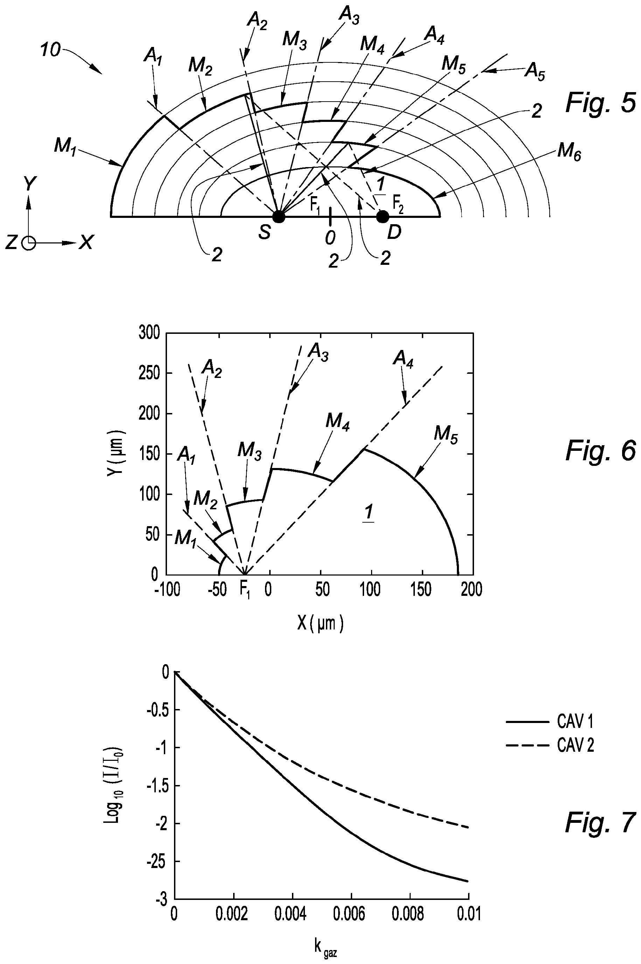

A la figure 5, les miroirs elliptiques $M_1$ à $M_6$ sont agencés consécutivement du premier foyer commun $F_1$ vers le second foyer commun $F_2$ de sorte que la suite géométrique est strictement décroissante. Cet agencement est le plus défavorable en termes de pertes de flux lumineux en raison du masquage du rayonnement lumineux 2.

Les miroirs elliptiques $M_1$ à $M_6$ sont agencés consécutivement de manière à former des jonctions, chaque jonction s'étendant avantageusement suivant un axe $A_1$ à $A_5$ passant par le premier foyer commun $F_1$.

Les premier et second foyers communs $F_1$, $F_2$ définissent une droite, et l'axe $A_1$ à $A_5$ suivant lequel s'étend chaque jonction forme un angle avec la droite, noté $\theta_i$, orienté du premier foyer commun $F_1$ vers le second foyer commun $F_2$, et vérifiant avantageusement :

$$\theta_i = \cos^{-1}\left(1 - \frac{2i}{N}\right), \qquad i \in [\![1, N]\!]$$

où :

- i est la i-ème jonction entre deux miroirs elliptiques $M_1$ à $M_6$ consécutifs,
- N est le nombre de miroirs elliptiques $M_1$ à $M_6$.

Exemple de réalisation

Dans l'exemple illustré à la figure 6, l'ensemble de miroirs elliptiques comporte 5 miroirs elliptiques $M_1$ à $M_5$ (N=5). Les miroirs elliptiques $M_1$ à $M_5$ sont agencés consécutivement du premier foyer commun $F_1$ vers le second foyer commun $F_2$ de sorte que les demi-grands axes consécutifs forment une suite géométrique strictement croissante, vérifiant :

$$a_{n+1} = q\, a_n$$

Où:

- n est un entier naturel compris entre 1 et N-1, soit un entier naturel compris entre 1 et 4,
- le demi-grand axe du miroir elliptique $M_1$ vérifie : $a_1$ = 50 $\mu$m,
- q est la raison de la suite géométrique vérifiant : $q = G \log(G)$, avec G=2.

Des simulations FDTD (« *Finite Différence Time Domain* » en langue anglaise ») ont été réalisées avec une longueur d'onde (notée $\lambda$) du rayonnement lumineux 2 égale à 4,5 $\mu$m. La cavité optique 1 est immergée dans un milieu fictif, représentant un gaz, dont la partie réelle de l'indice de réfraction est égale à 1, et dont la partie imaginaire de l'indice de réfraction est noté $k_{gaz}$ et vérifie :

$$k_{gaz} = \frac{\lambda}{4\pi} \alpha\, C$$

où :

- $\alpha$ est l'absorptivité du gaz à la longueur d'onde considérée du rayonnement lumineux 2,
- C est la concentration du gaz dans la cavité optique 1.

Comme illustré à la figure 7, il a été comparé l'atténuation d'intensité d'un signal lumineux, émis par la source lumineuse S, et reçu par le détecteur D entre une cavité optique de l'état de la technique (CAV1) et la cavité optique 1 selon l'invention (CAV2), à compacité égale, c'est-à-dire avec la même surface rectangulaire dans laquelle est inscrite l'ellipse de l'état de la technique. Les simulations FDTD montrent que la cavité optique 1 selon l'invention :

- sature moins en absorption pour les fortes concentrations de gaz ($k_{gaz}$ élevé),
- a une sensibilité comparable pour les faibles concentrations de gaz ($k_{gaz}$ faible), la sensibilité étant liée à la pente de la courbe à l'origine.

Il en résulte que la cavité optique 1 selon l'invention autorise une plus grande dynamique de l'intervalle [$C_{min}$, $C_{max}$], à compacité égale, par rapport à l'état de la technique.

## Guide d'onde

La cavité optique 1 comporte avantageusement deux extrémités réfléchissantes opposées (non visibles sur les figures), adaptées pour réfléchir le rayonnement lumineux 2, et agencées de part et d'autre de l'ensemble des miroirs elliptiques $M_1$ à $M_6$ de manière à former un guide d'onde. Les deux extrémités réfléchissantes guident le rayonnement lumineux 2 suivant la direction Z de l'épaisseur de la cavité optique 1. L'ensemble des miroirs elliptiques $M_1$, $M_2$, $M_3$ relient les deux extrémités réfléchissantes.

Chaque extrémité réfléchissante comporte une surface réfléchissante possédant un coefficient de réflexion du rayonnement lumineux 2 supérieur ou égal à 80%, de préférence supérieur ou égal à 85%, plus préférentiellement supérieur ou égal à 90%, pour tout angle d'incidence. Avantageusement, le coefficient de réflexion du rayonnement lumineux 2 est supérieur ou égal à 95%, de préférence supérieur ou égal à 98% pour tout angle d'incidence inférieur à 45°. Par « coefficient de réflexion », on entend le coefficient de réflexion en intensité, pour un angle d'incidence compris entre 0° (incidence normale) et 90° (incidence rasante), pour une longueur d'onde donnée, et tenant compte des polarisations « s » et « p » moyennées arithmétiquement lorsque la source lumineuse S est une source thermique. L'angle d'incidence est l'angle entre la direction de propagation du rayonnement lumineux 2 et la normale à la surface réfléchissante de l'extrémité réfléchissante correspondante. La surface réfléchissante de chaque extrémité réfléchissante est préférentiellement plane. Les surfaces réfléchissantes, planes, des extrémités réfléchissantes sont avantageusement parallèles.

La surface réfléchissante de chaque extrémité réfléchissante est préférentiellement réalisée dans un matériau métallique. Le matériau métallique est préférentiellement sélectionné dans le groupe comportant l'or, l'argent, l'aluminium et le cuivre. La surface réfléchissante de chaque extrémité réfléchissante est avantageusement revêtue d'une couche de protection contre une corrosion du matériau métallique. La couche de protection est avantageusement réalisée dans un matériau sélectionné dans le groupe comportant $SiO_2$, SiN, $Si_3N_4$, un carbone amorphe DLC (pour l'acronyme *Diamond-like carbon* en langue anglaise), le polytétrafluoroéthylène (PTFE), Pt, TiN.

Les deux extrémités réfléchissantes sont préférentiellement réalisées chacune sous la forme d'une plaque. Les plaques sont avantageusement munies d'ouvertures conformées pour recevoir la source lumineuse S et le détecteur D lorsque les plaques sont mises en contact et fixées entre elles. Les deux extrémités réfléchissantes forment avantageusement des miroirs plans.

## Fabrication de la cavité optique

Un premier procédé de fabrication d'une cavité optique 1 selon l'invention, comporte les étapes :

    a) prévoir des premier et second substrats d'un matériau, le matériau étant de préférence semi-conducteur, plus préférentiellement le silicium ;
    b) évider chacun des premier et second substrats de manière à former un fond et à conserver une partie superficielle ;
    c) assembler les premier et second substrats de sorte que :

- les parties superficielles conservées lors de l'étape b) forment l'ensemble des miroirs elliptiques $M_1$ à $M_6$,
- les fonds forment les extrémités réfléchissantes opposées de la cavité optique 1.

L'étape b) est avantageusement exécutée par une gravure ionique réactive profonde. L'étape b) comporte préférentiellement une étape préalable consistant à déposer une résine photosensible à la surface des premier et second substrats. Puis les évidements peuvent être obtenus par des étapes de photolithographie et de gravure. L'étape b) est avantageusement exécutée de sorte que les évidements obtenus permettent de former des fonds plans. Le fait d'évider deux substrats, au lieu d'un seul, lors de l'étape b) permet d'augmenter l'épaisseur de la cavité optique 1 formée lors de l'étape c) afin de réduire les pertes optiques par réflexion.

La surface réfléchissante des extrémités réfléchissantes est avantageusement formée par un dépôt d'un matériau métallique sur les fonds des premier et second substrats, le dépôt étant de préférence exécuté par pulvérisation cathodique. Le dépôt du matériau métallique peut également être exécuté par évaporation sous vide ou par électrolyse. Le dépôt du matériau métallique est exécuté avant l'étape c).

Les surfaces réfléchissantes des miroirs elliptiques $M_1$ à $M_6$ sont avantageusement formées par un dépôt d'un matériau métallique sur un bord latéral d'une partie superficielle, le dépôt étant de préférence exécuté par pulvérisation cathodique. Le dépôt du matériau métallique peut également être exécuté par évaporation sous vide ou par électrolyse. Le dépôt du matériau métallique est exécuté avant l'étape c).

Ainsi, les évidements des premier et second substrats obtenus lors de l'étape b) permettent d'obtenir deux demi-cavités. La cavité optique 1 est formée lors de l'étape c) en assemblant les premier et second substrats afin de réunir les deux demi-cavités. L'étape c) peut être exécutée par un collage de type scellement eutectique. Le fait de former un évidement, par exemple par une gravure ionique réactive, dans un substrat d'un matériau semi-conducteur est une solution peu coûteuse et viable car l'inclinaison obtenue des parties superficielles relativement à la normale aux premier et second substrats est typiquement de l'ordre de 1° à 2°.

Un deuxième procédé de fabrication d'une cavité optique 1 selon l'invention, comporte les étapes :

a) prévoir des premier et second moules comportant respectivement une empreinte de première et seconde pièces comportant chacune une embase surmontée d'une partie superficielle ;

b) injecter un matériau plastique dans les premier et second moules de manière à obtenir les première et seconde pièces ;

c) assembler les première et seconde pièces de sorte que :

- les parties superficielles forment l'ensemble des miroirs elliptiques $M_1$ à $M_6$,
- les embases forment les extrémités réfléchissantes opposées de la cavité optique 1.

L'étape a) est de préférence exécutée de sorte que les premier et second moules comportent chacun une partie fixe et une partie mobile. L'étape b) est de préférence exécutée avec une presse à injecter.

La surface réfléchissante des extrémités réfléchissantes est avantageusement formée par un dépôt d'un matériau métallique sur les embases des premier et second substrats, le dépôt étant de préférence exécuté par pulvérisation cathodique. Le dépôt du matériau métallique peut également être exécuté par évaporation sous vide ou par électrolyse. Le dépôt du matériau métallique est exécuté avant l'étape c).

Les surfaces réfléchissantes des miroirs elliptiques $M_1$ à $M_6$ sont avantageusement formées par un dépôt d'un matériau métallique sur un bord latéral d'une partie superficielle, le dépôt étant de préférence exécuté par pulvérisation cathodique. Le dépôt du matériau métallique peut également être exécuté par évaporation sous vide ou par électrolyse. Le dépôt du matériau métallique est exécuté avant l'étape c).

Ainsi, la cavité optique 1 est formée lors de l'étape c) en assemblant les première et seconde pièces afin de réunir deux demi-cavités délimitées chacune par l'embase et la partie superficielle correspondante. L'injection plastique est une solution peu coûteuse et viable dans la mesure où les défauts de forme ne sont pas préjudiciables pour imager correctement la source lumineuse S sur le détecteur D.

## Capteur

Un objet de l'invention est un capteur 10 spectroscopique, comportant :

- une cavité optique 1 conforme à l'invention,
- une source lumineuse S, agencée au premier foyer commun $F_1$ pour émettre un rayonnement lumineux 2 ;
- un détecteur D, agencé au second foyer commun $F_2$ pour recevoir le rayonnement lumineux 2 sortant des miroirs elliptiques $M_1$ à $M_6$.

Le capteur 10 spectroscopique peut être un capteur infrarouge (e.g. non-dispersif) pour détecter un fluide tel qu'un gaz. A titre d'exemples non limitatifs, le gaz peut être sélectionné dans le groupe comportant le monoxyde de carbone, le dioxyde de carbone, au moins un hydrocarbure, un hydrochlorofluorocarbure, un chlorofluorocarbure, le monoxyde d'azote, le dioxyde d'azote, le dioxyde de soufre, l'ozone. Le gaz peut également être sélectionné parmi les gaz suivants, absorbant dans une bande spectrale d'absorption comprise entre 0,78 $\mu$m et 12 $\mu$m :

- HF, HCl, $SO_3$, HBr, $H_2S$, COS, $C_2H_6$, $C_3H_8$, $C_4H_{10}$,
- $COCl_2$, $BF_3$, $CH_4$, $HNO_3$, un composé organique volatil (e.g. $C_6H_6$, $CH_3COCH_3$), $B_2H_6$, CO, $CS_2$, HCN, $WF_6$, $N_2O$, $NH_3$,
- $AsH_3$, un hydrocarbure aromatique polycyclique, le benzène, le toluène, les trois isomères du xylène, $C_2H_4O$, $BCl_3$.

Le capteur 10 spectroscopique peut être également un capteur de particules, ou un capteur biologique.

Dans le cas d'un capteur de particules, la source lumineuse S émet préférentiellement dans le visible. La source lumineuse S peut être de type LED. Le principe de fonctionnement est le suivant. Les particules génèrent des ondes diffusées dans la cavité optique 1 à des angles aléatoires, qui ne seront pas refocalisées jusqu'au détecteur D en raison d'absorptions successives notamment par les miroirs elliptiques $M_1$ à $M_6$. Cette perte de transmission mesurée par le détecteur D est révélatrice du type (indice, taille) et de la concentration des particules dans la mesure où les particules ne sont généralement pas intrinsèquement absorbantes.

**Source lumineuse**

A titre d'exemples non limitatifs, la source lumineuse S peut être une source thermique ou un laser à cascade quantique. La source lumineuse S peut être une source infrarouge. La source lumineuse S comporte avantageusement un élément, par exemple de type filament, dans lequel on fait circuler un courant électrique de sorte que l'élément s'échauffe et émet un rayonnement infrarouge. L'élément présente une dimension, notée e, suivant l'épaisseur de la cavité optique 1 vérifiant préférentiellement :
$100\ \mu m \le e \le E \le 1{,}5\ mm$, plus préférentiellement $250\ \mu m \le e \le E \le 1200\ \mu m$ où E est l'épaisseur de la cavité optique 1.
L'élément présente préférentiellement la forme d'un disque présentant une surface circulaire, avec un diamètre de 250 $\mu$m (correspondant à la dimension e). On définit l'axe de la source lumineuse S comme la normale à la surface circulaire. A titre d'exemple non limitatif, le disque peut présenter une épaisseur de 400 nm suivant l'axe de la source lumineuse S. L'image de la source lumineuse S (i.e. l'élément en forme de disque) est un rectangle présentant une largeur de 250 $\mu$m et une hauteur de 600 $\mu$m (la hauteur correspondant à la direction Z suivant l'épaisseur de la cavité optique 1).

**Détecteur**

Le détecteur D peut être un détecteur infrarouge. Le détecteur infrarouge peut être par exemple un bolomètre ou un pyromètre. Le détecteur infrarouge peut présenter une surface sensible à l'infrarouge. A titre d'exemple non limitatif, la surface sensible peut avoir la forme d'un carré de 600 $\mu$m de côté. Le détecteur D est équipé préférentiellement d'un filtre optique de type passe-bande, centré sur la bande spectrale d'absorption du gaz à détecter le cas échéant, lorsque la source lumineuse S est une source thermique. Le détecteur D s'étend avantageusement selon Z, sur toute l'épaisseur de la cavité optique 1, afin de recevoir un maximum de rayonnement lumineux, la conjugaison des premier et second foyers communs $F_1$, $F_2$ des miroirs elliptiques $M_1$ à $M_6$ étant imparfaite selon Z.
Dans le cas d'un capteur 10 spectroscopique de type capteur de particules avec une source lumineuse S émettant dans le visible, le détecteur D est avantageusement une photodiode à base de silicium.
L'invention ne se limite pas aux modes de réalisation exposés. L'homme du métier est mis à même de considérer leurs combinaisons techniquement opérantes, et de leur substituer des équivalents.

**Revendications**

1. Cavité optique (1), comportant :

   - un ensemble de miroirs elliptiques ($M_1$ à $M_6$), destinés à recevoir un rayonnement lumineux (2) émis par une source lumineuse (S), le rayonnement lumineux (2) sortant des miroirs elliptiques ($M_1$ à $M_6$) étant destiné à être reçu par un détecteur (D) ;
   - un premier foyer commun ($F_1$) et un second foyer commun ($F_2$), partagés par l'ensemble des miroirs elliptiques ($M_1$ à $M_6$), la source lumineuse (S) étant destinée à être agencée au premier foyer commun ($F_1$), le détecteur (D) étant destiné à être agencé au second foyer commun ($F_2$) ;
   - un contour, comprenant une partie formée par l'ensemble des miroirs elliptiques ($M_1$ à $M_6$) agencés consécutivement,

   **caractérisée en ce que** les miroirs elliptiques ($M_1$ à $M_6$) sont agencés consécutivement de manière à former des jonctions, chaque jonction s'étendant suivant un axe ($A_1$ à $A_5$) passant par le premier foyer commun ($F_1$).

2. Cavité optique (1) selon la revendication 1, dans laquelle chaque miroir elliptique ($M_1$ à $M_6$) possède un demi-grand axe ($a_1$ à $a_6$) ; et dans laquelle les miroirs elliptiques ($M_1$ à $M_6$) sont agencés consécutivement de sorte que les demi-grands axes consécutifs ($a_1$ à $a_6$) forment une suite monotone.

3. Cavité optique (1) selon la revendication 2, dans laquelle les miroirs elliptiques ($M_1$ à $M_6$) sont agencés consécutivement du premier foyer commun ($F_1$) vers le second foyer commun ($F_2$) de sorte que la suite monotone est strictement croissante.

4. Cavité optique (1) selon la revendication 2 ou 3, dans laquelle la suite monotone est une suite géométrique.

5. Cavité optique (1) selon la revendication 4, dans laquelle la suite géométrique possède une raison, notée q, vérifiant :

$$q = G\log(G)$$

où G est une constante.

6. Cavité optique (1) selon l'une des revendications 1 à 5, dans laquelle les premier et second foyers communs ($F_1$, $F_2$) définissent une droite, et l'axe ($A_1$ à $A_5$) suivant lequel s'étend chaque jonction forme un angle avec la droite, noté $\theta_i$, orienté du premier foyer commun ($F_1$) vers le second foyer commun ($F_2$), et vérifiant :

$$\theta_i = \cos^{-1}\left(1 - \frac{2i}{N}\right), \qquad i \in [\![1, N]\!]$$

où :

- i est la i-ème jonction entre deux miroirs elliptiques ($M_1$ à $M_6$) consécutifs,
- N est le nombre de miroirs elliptiques ($M_1$ à $M_6$).

7. Cavité optique (1) selon l'une des revendications 1 à 6, comportant deux extrémités réfléchissantes opposées, adaptées pour réfléchir le rayonnement lumineux (2), et agencées de part et d'autre de l'ensemble des miroirs elliptiques ($M_1$ à $M_6$) de manière à former un guide d'onde.

8. Capteur (10) spectroscopique, comportant :

- une cavité optique (1) selon l'une des revendications 1 à 7,
- une source lumineuse (S), agencée au premier foyer commun ($F_1$) pour émettre un rayonnement lumineux (2) ;
- un détecteur (D), agencé au second foyer commun ($F_2$) pour recevoir le rayonnement lumineux (2) sortant des miroirs elliptiques ($M_1$ à $M_6$).

**Patentansprüche**

1. Optischer Hohlraum (1), welcher aufweist:

- eine Anordnung von elliptischen Spiegeln ($M_1$ bis $M_6$), die dazu bestimmt sind, eine Lichtstrahlung (2) zu empfangen, die von einer Lichtquelle (S) ausgesendet wird, wobei die aus den elliptischen Spiegeln ($M_1$ bis $M_6$) austretende Lichtstrahlung (2) dazu bestimmt ist, von einem Detektor (D) empfangen zu werden;
- einen ersten gemeinsamen Brennpunkt ($F_1$) und einen zweiten gemeinsamen Brennpunkt ($F_2$), die der Anordnung der elliptischen Spiegel ($M_1$ bis $M_6$) gemeinsam sind, wobei die Lichtquelle (S) dazu bestimmt ist, im ersten gemeinsamen Brennpunkt ($F_1$) angeordnet zu werden, und der Detektor (D) dazu bestimmt ist, im zweiten gemeinsamen Brennpunkt ($F_2$) angeordnet

zu werden;
- eine Kontur, die einen Teil umfasst, der von der Anordnung der nacheinander angeordneten elliptischen Spiegel ($M_1$ bis $M_6$) gebildet wird,

**dadurch gekennzeichnet, dass** die elliptischen Spiegel ($M_1$ bis $M_6$) so nacheinander angeordnet sind, dass sie Verbindungsstellen bilden, wobei sich jede Verbindungsstelle entlang einer Achse ($A_1$ bis $A_5$) erstreckt, die durch den ersten gemeinsamen Brennpunkt ($F_1$) verläuft.

2. Optischer Hohlraum (1) nach Anspruch 1, wobei jeder elliptische Spiegel ($M_1$ bis $M_6$) eine große Halbachse ($a_1$ bis $a_6$) besitzt; und wobei die elliptischen Spiegel ($M_1$ bis $M_6$) derart nacheinander angeordnet sind, dass die aufeinander folgenden großen Halbachsen ($a_1$ bis $a_6$) eine monotone Folge bilden..

3. Optischer Hohlraum (1) nach Anspruch 2, wobei die elliptischen Spiegel ($M_1$ bis $M_6$) nacheinander vom ersten gemeinsamen Brennpunkt ($F_1$) in Richtung des zweiten gemeinsamen Brennpunktes ($F_2$) derart angeordnet sind, dass die monotone Folge streng wachsend ist.

4. Optischer Hohlraum (1) nach Anspruch 2 oder 3, wobei die monotone Folge eine geometrische Folge ist.

5. Optischer Hohlraum (1) nach Anspruch 4, wobei die geometrische Folge einen mit q bezeichneten Quotienten besitzt, für den gilt:

$$q = G \log(G)$$

wobei G eine Konstante ist.

6. Optischer Hohlraum (1) nach einem der Ansprüche 1 bis 5, wobei der erste und der zweite gemeinsame Brennpunkt ($F_1$, $F_2$) eine Gerade definieren und die Achse ($A_1$ bis $A_5$), entlang der sich eine jeweilige Verbindungsstelle erstreckt, einen mit $\theta_i$ bezeichneten Winkel mit der Geraden bildet, der vom ersten gemeinsamen Brennpunkt ($F_1$) zum zweiten gemeinsamen Brennpunkt ($F_2$) gerichtet ist und für den gilt:

$$\theta_i = \cos^{-1}\left(1 - \frac{2i}{N}\right), i \in [\![1, N]\!]$$

wobei:

- i die i-te Verbindungsstelle zwischen zwei aufeinander folgenden elliptischen Spiegeln ($M_1$ bis $M_6$) ist,

- N die Anzahl elliptischer Spiegel ($M_1$ bis $M_6$) ist.

7. Optischer Hohlraum (1) nach einem der Ansprüche 1 bis 6, welcher zwei einander gegenüberliegende reflektierende Enden aufweist, die dafür ausgelegt sind, die Lichtstrahlung (2) zu reflektieren, und beiderseits der Anordnung der elliptischen Spiegel ($M_1$ bis $M_6$) so angeordnet sind, dass sie einen Wellenleiter bilden.

8. Spektroskopischer Sensor (10), welcher aufweist:

   - einen optischen Hohlraum (1) nach einem der Ansprüche 1 bis 7,
   - eine Lichtquelle (S), die im ersten gemeinsamen Brennpunkt ($F_1$) angeordnet ist, um eine Lichtstrahlung (2) auszusenden;
   - einen Detektor (D), der im zweiten gemeinsamen Brennpunkt ($F_2$) angeordnet ist, um die aus den elliptischen Spiegeln ($M_1$ bis $M_6$) austretende Lichtstrahlung (2) zu empfangen.

**Claims**

1. Optical cavity (1), comprising:

   - a set of elliptical mirrors ($M_1$ to $M_6$) intended to receive light radiation (2) emitted by a light source (S), the light radiation (2) exiting from the elliptical mirrors ($M_1$ to $M_6$) being intended to be received by a detector (D);
   - a first common focus ($F_1$) and a second common focus ($F_2$), which are shared by the set of elliptical mirrors ($M_1$ to $M_6$), the light source (S) being intended to be arranged at the first common focus ($F_1$), the detector (D) being intended to be arranged at the second common focus ($F_2$);
   - an outline, comprising a portion formed by all of the elliptical mirrors ($M_1$ to $M_6$) arranged consecutively,

   **characterized in that** the elliptical mirrors ($M_1$ to $M_6$) are arranged consecutively so as to form junctions, each junction extending along an axis ($A_1$ to $A_5$) passing through the first common focus ($F_1$).

2. Optical cavity (1) according to Claim 1, wherein each elliptical mirror ($M_1$ to $M_6$) possesses a semi-major axis ($a_1$ to $a_6$); and wherein the elliptical mirrors ($M_1$ to $M_6$) are arranged consecutively so that the consecutive semi-major axes ($a_1$ to $a_6$) form a monotonic sequence.

3. Optical cavity (1) according to Claim 2, wherein the elliptical mirrors ($M_1$ to $M_6$) are arranged consecutively from the first common focus ($F_1$) to the second common focus ($F_2$) so that the monotonic sequence is strictly increasing.

4. Optical cavity (1) according to Claim 2 or 3, wherein the monotonic sequence is a geometric sequence.

5. Optical cavity (1) according to Claim 4, wherein the geometric sequence possesses a common ratio, denoted q, respecting:

$$q = G \, log(G)$$

where G is a constant.

6. Optical cavity (1) according to one of Claims 1 to 5, wherein the first and second common foci ($F_1$, $F_2$) define a straight line, and the axis ($A_1$ to $A_5$) along which each junction extends makes an angle to the straight line, denoted $\theta_i$, that is oriented from the first common focus ($F_1$) toward the second common focus ($F_2$), and that respects:

$$\theta_i = cos^{-1}\left(1 - \frac{2i}{N}\right), \qquad i \in [\![1, N]\!]$$

where:

   - i is the $i^{th}$ junction between two consecutive elliptical mirrors ($M_1$ to $M_6$),
   - N is the number of elliptical mirrors ($M_1$ to $M_6$).

7. Optical cavity (1) according to one of Claims 1 to 6, comprising two opposite reflective ends suitable for reflecting the light radiation (2) and arranged on either side of all of the elliptical mirrors ($M_1$ to $M_6$) so as to form a waveguide.

8. Spectroscopic sensor (10), comprising:

   - an optical cavity (1) according to one of Claims 1 to 7,
   - a light source (S) arranged at the first common focus ($F_1$) in order to emit light radiation (2);
   - a detector (D) arranged at the second common focus ($F_2$) in order to receive the light radiation (2) exiting from the elliptical mirrors ($M_1$ to $M_6$).

Fig. 1

Fig. 2

Fig. 3

Fig. 4

Fig. 5

Fig. 6

Fig. 7

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- DE 4102146